# EUROPÄISCHE PATENTANMELDUNG

(11) **EP 0 830 016 A2**
(43) Veröffentlichungstag der Anmeldung: **18.03.1998**
(21) Anmeldenummer: 97202695.9
(22) Anmeldetag: 02.09.1997
(51) Int. Cl.: H04N 5/253

(54) **Filmabtaster mit variabler Bildauflösung**

(30) Priorität: 12.09.1996 DE 19637137
(71) Anmelder: Philips Patentverwaltung GmbH, 22335 Hamburg (DE); Philips Electronics N.V., 5621 BA Eindhoven (NL)
(72) Erfinder: Fach, Reinhard, Dipl.-Ing, Röntgenstra e 24, 22335 Hamburg (DE); Brösamle, Michael, Dipl.-Ing., Röntgenstra e 24, 22335 Hamburg (DE); Brähler, Uwe, Dipl.-Ing., Röntgenstra e 24, 22335 Hamburg (DE)
(74) Vertreter: Volmer, Georg, Dipl.-Ing.

(57) **Zusammenfassung**

Die Erfindung betrifft einen Filmabtaster mit wenigstens einem ersten Bildspeicher (4) zur jeweiligen Speicherung der digitalisierten Bildpunktdaten eines abgetasteten Filmbildes und mit wenigstens einer Steuervorrichtung (6) zum Auslesen der jeweiligen Bildpunktdaten eines Bildausschnittes des gespeicherten Filmbildes aus dem ersten Bildspeicher (5). Um Ausgabebilder in einem beliebigen Format und Auflösung zu erzeugen, die beispielsweise zur Weiterverarbeitung in Multimediaanwendungen in Echtzeit verwendet werden können, ist beim erfindungsgemäßen Filmabtaster in der Steuervorrichtung (6) ein Rechenwerk zur Erzeugung jeweils eines Ausgabebildes in einer bestimmten Größe, mit einem bestimmten Seitenverhältnis und mit einer bestimmten Anzahl von Bildpunkten pro Ausgabebildzeile und von Zeilen pro Ausgabebild durch Berechnung von neuen Bildpunkten vorgesehen. Durch Bestimmung des Formates, insbesondere der Auflösung, für das Ausgabebild schon während des Abtastvorgangs wird eine direkte Weiterverarbeitung auf Rechnerplattformen oder in Multimediaanwendungen ermöglicht. Auf diese Weise reduziert sich auch die Übertragungsgeschwindigkeit und die benötigte Kapazität bei einer Speicherung der Daten.

## Beschreibung

Die Erfindung betrifft einen Filmabtaster mit wenigstens einem ersten Bildspeicher zur jeweiligen Speicherung der digitalisierten Bildpunktdaten eines abgetasteten Filmbildes und mit wenigstens einer Steuervorrichtung zum Auslesen der jeweiligen Bildpunktdaten eines Bildausschnittes des gespeicherten Filmbildes aus dem ersten Bildspeicher.

Bekannte Filmabtaster tasten mit einem optoelektronischen Wandler die aufeinanderfolgenden Bilder eines kontinuierlich bewegten Kinofilms ab und erzeugen dabei ein entsprechend der Bildinformation der Filmbilder moduliertes Videosignal, das einem bestimmten Fernsehübertragungsstandard (z. B. NTSC, PAL, SECAM) genügt. Dabei ist es möglich das Format der erzeugten TV-Bilder (Fernseh-Signale) dahingehend zu modifizieren, daß ein bestimmter Bereich des abgetasteten Filmbildes ausgewählt wird, aus dem dann ein Fernsehbild in einem bestimmten Seitenverhältnis erzeugt wird. Dazu werden die Bildinformationsdaten des abgetasteten Filmbildes in einem Bildspeicher abgelegt und der ausgewählte Bereich mittels der Steuervorrichtung zur Weiterverarbeitung ausgelesen. Das Fernsehbild wird dann in Form eines standardisierten Fernsehsignals zur Ausstrahlung oder zur Speicherung auf einem geeigneten Medium ausgegeben. Wenn Bilder in einem anderen Format erzeugt werden sollen, das beispielsweise zur Weiterverarbeitung in einem Computer geeignet ist, muß die bildpunktweise Auflösung entsprechend angepaßt werden können. Dazu müssen die Filmbilder nach dem Stand der Technik durch sogenannte Frame-Grabber oder sehr langsam arbeitende Scanner abgetastet werden. Dies führt zu einer Verzögerung, die eine Verarbeitung in Echtzeit während der Abtastung eines Filmes unmöglich macht.

Die Aufgabe der Erfindung besteht daher darin, einen Filmabtaster zu schaffen, der Ausgabebilder in einem beliebigen Format und Auflösung erzeugt, die beispielsweise zur Weiterverarbeitung in Multimediaanwendungen in Echtzeit verwendet werden können.

Diese Aufgabe wird beim Gegenstand der Erfindung dadurch gelöst, daß in der Steuervorrichtung ein Rechenwerk zur Erzeugung jeweils eines Ausgabebildes in einer bestimmten Größe, mit einem bestimmten Seitenverhältnis und mit einer bestimmten Anzahl von Bildpunkten pro Ausgabebildzeile und von Zeilen pro Ausgabebild durch Berechnung von neuen Bildpunkten vorgesehen ist. Die mit dem ersten Bildspeicher gekoppelte Steuervorrichtung liest aus dem ersten Bildspeicher, in dem vorzugsweise die Bildpunktdaten eines kompletten abgetasteten Filmbildes abgelegt sind, die Bildpunktdaten eines Bildausschnittes aus. Dieser Ausschnitt kann in seiner Lage und Größe innerhalb des kompletten Filmbildes gewählt werden. Innerhalb der Steuervorrichtung verarbeitet das Rechenwerk die ausgewählten Bildpunktdaten zu einem Ausgabebild, dessen Größe und Seitenverhältnis frei gewählt werden kann. Dazu wird der Ausschnitt nicht nur vergrößert oder verkleinert (Zooming), sondern kann auch in seiner Form verändert werden (Sizing). Beispielsweise kann so ein quadratischer Bildausschnitt, der etwa 30% des Filmbildes ausmacht, zu einem rechteckförmigen Ausgabebild mit einem Längenverhältnis der Seiten von 16:9 in einer vielfachen Größe verarbeitet werden. Um das Ausgabebild für möglichst vielen Anwendungen verwenden zu können, kann auch die Auflösung variiert werden, so daß mit den einstellbaren Parametern praktisch alle notwendigen Formate für das Ausgabebild möglich sind. Für die Variation der Auflösung kann die Anzahl der Bildpunkte in einer Ausgabebildzeile sowie die Anzahl der Zeilen pro Ausgabebild verändert werden. Für die auf diese Weise beliebig wählbare Auflösung des Ausgabebildes werden neue Bildpunkte durch das Rechenwerk berechnet. Dazu können Bildbearbeitungsprozeduren verwendet werden, wie sie in der Bildnachbearbeitung benutzt werden.

In einer bevorzugten Weiterbildung der Erfindung ist in dem Rechenwerk wenigstens ein Filterschaltkreis zur Bildung von neuen Bildpunkten für das Ausgabebild in wenigstens einer Dimension mittels Interpolationsverfahren und wenigstens ein Spiegelschaltkreis zur Spiegelung des Bildausschnittes an wenigstens einer seiner Diagonalen vorgesehen. Zur Berechnung der Daten der neuen Bildpunkte sind im Rechenwerk vorzugsweise integrierte Filterschaltkreise vorgesehen, die die Daten dieser sogenannten Intermediatepixel durch Interpolationsverfahren bilden (z. B. Multi-Phase FIR-Filter). Dazu werden nach Maßgabe des gewählten Formates für das Ausgabebild zunächst beispielsweise die horizontalen Linien des Bildausschittes bearbeitet. Durch das Interpolationsverfahren werden je nach gewählter Vergrößerung oder Verkleinerung zusätzliche Bildpunkte hinzugefügt oder überflüssige Bildpunkte modifiziert. Abhängig von der gewählten Auflösung werden entsprechend viele Zwischenwerte (Intermediatepixel) hinzugefügt und zur Berechnung dieser neuen Bildpunkte zwischen benachbarten Bildpunkte (z. B. 8) aus dem ursprünglichen Bildausschnitt interpoliert. Danach wird das Bild in einem Spiegelschaltkreis durch Spiegelung der Bildpunkte an einer Bilddiagonalen um 90° gedreht. Auf diese Weise können mit dem gleichen Filterschaltkreis, der beispielsweise durch einen Filterbaustein mit horizontaler Orientierung realisiert ist, die ursprünglich vertikalen Linien des Bildausschnittes in der gleichen Art bearbeitet werden. Daran schließt sich eine erneute Spiegelung des Bildes an der Bilddiagonalen an, wodurch man den gewählten Bildausschnitt in dem gewählten Format mit den entsprechenden neuen Bildpunkten erhält. Anstelle des aufgezeigten Verfahrens kann auch ein Filterschaltkreis mit einer zweidimensionalen Orientierung verwendet werden, der die erforderlichen neuen Bildpunkte in zwei Dimensionen gleichzeitig berechnet, wodurch die Spiegelung des Bildes überflüssig wird. Eine weitere Möglichkeit zur Berechnung der erforderlichen Daten kann eine geeignete Software bieten, die auf einem entsprechend leistungsfähigen Mikrocomputer läuft, um die Berechnung während der kontinuierlichen Filmabtastung in Echtzeit zu gewährleisten.

In einer vorteilhaften Ausführungsform der Erfindung ist ein zweiter Bildspeicher zum Einlesen jeweils eines Ausgabebildes vorgesehen. An die Steuervorrichtung kann statt einer direkten Ausgabe der Daten des erzeugten Ausgabebildes ein zweiter Bildspeicher gekoppelt werden. Die Daten des Ausgabebildes stehen dadurch in einem sogenannten Puffer- oder Zwischenspeicher zur Verfügung, der, abhängig von einer beliebigen Übertragungsart, entsprechend ausgelesen werden kann.

Für eine Weiterbildung ist wenigstens eine Eingabeeinheit zur Lieferung von Steuerungsparameter für das Rechenwerk für die Größe und die Lage des Bildausschnittes, für die Größe und das Seitenverhältnis des Ausgabebildes, für die Anzahl von Bildpunkten pro Ausgabebildzeile und für die Anzahl von Zeilen pro Ausgabebild vorgesehen. Über die Eingabeeinheit können dem Filmabtaster Steuerungsparameter zugeführt werden, die die Verarbeitung der Filmbilder steuern. Während der Filmabtastung kann auf diese Weise der zu bearbeitende Bildausschnitt innerhalb des abgetasteten Filmbildes gewählt werden. Weiterhin kann das Format des Ausgabebildes gesteuert werden. Auf diese Weise können mittels einer einfachen Steuerung durch direkte Einwirkung auf die entsprechenden Parameter alle möglichen Formate für das Ausgabebild eingestellt werden.

Bei einer geplanten Ausführungsform enthält die Eingabeeinheit eine Tastatur, die zur Eingabe von Zahlenwerten sowie zur Anwahl von Vorzugsformaten für das Seitenverhältnis und die Auflösung des jeweiligen Ausgabebildes vorgesehen ist. Über die Tastatur können direkt beliebige Zahlenwerte für die Steuerungsparameter eingegeben werden, wobei oft benötigte Einstellungen als Vorzugsformate direkt angewählt werden können. Die Eingabe kann dabei mit Hilfe eines PC und einer geeigneten Software erfolgen, die die eingegebenen Werte an das Rechenwerk übermittelt. Über eine menügesteuerte Bedienoberfläche kann dabei beispielsweise auch mit einer Maus eingegeben werden.

Für eine geplante Ausführungsform sind als Vorzugsformate jeweils Seitenverhältnisse und Auflösungen von 4:3 bei 720*540 Bildpunkten, 16:9 bei 720*405 Bildpunkten und 16:9 bei 1920*1080 Bildpunkten vorgesehen. Bei den angegebenen Vorzugsformaten handelt es sich um oft verwendete Formate, bei denen die Steuerungsparameter sowohl für das Seitenverhältnis als auch für die Anzähl von Bildpunkten pro Zeile und von Zeilen pro Bild für das Format der Ausgabebilder jeweils voreingestellt sind.

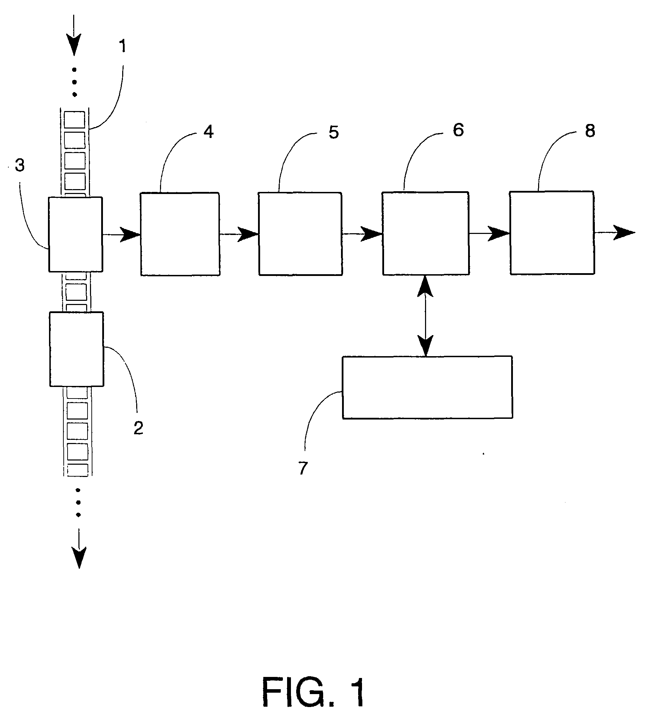

Im folgenden soll ein Ausführungsbeispiel der Erfindung anhand einer schematischen Darstellung näher erläutert werden. Dabei zeigt
- Figur 1:: ein Blockdiagramm mit den verwendeten Funktionsblöcken.

In der Figur 1 ist dargestellt, wie ein Film 1 mittels einer Transportvorrichtung 2 durch einen optoelektronischen Wandler 3 bewegt wird. Die Transportvorrichtung 2 zieht den Film 1 dabei in einer kontinuierlichen Bewegung an den Sensoren des optoelektronischen Wandlers 3 vorbei, in dem der Film abgetastet ("gescannt") wird und Bildsignale erzeugt werden. Die Bildsignale werden in einem A/D-Wandler 4 digitalisiert, wobei die Amplitudenquantisierung nicht von einem Fernsehstandard, sondern von der höchstmöglichen Abtasterauflösung bestimmt wird. Die im A/D-Wandler 4 gebildeten digitalen Bildpunktdaten eines abgetasteten Filmbildes werden in einem ersten Bildspeicher 5 abgelegt. Eine Steuervorrichtung 6 ist mit dem ersten Bildspeicher 5 und einer Eingabeeinheit 7 gekoppelt. Weiterhin ist noch ein zweiter Bildspeicher 8 an die Steuervorrichtung 6 gekoppelt.

Die Steuervorrichtung 6 erhält von der Eingabeeinheit 7 Steuerparameter in Form von Zahlenwerten. Die Eingabeeinheit 7 ist dabei so ausgebildet, daß über eine Tastatur und/oder eine Maus eine menügesteuerte Bedienoberfläche auf einem Bildschirm bedient wird. Zunächst wird von dem im Bildspeicher 5 abgelegten Filmbild ein Bildausschnitt ausgewählt. Dabei können sowohl die Lage innerhalb des Filmbildes als auch die Abmessungen frei bestimmt werden. Die Steuervorrichtung 6 liest daraufhin lediglich die Daten der betreffenden Bildpunkte aus dem ersten Bildspeicher 5 aus. Auf diese Weise müssen nicht die Daten eines kompletten Filmbildes, sondern nur die Daten übertragen und weiterverarbeitet werden, die auch tatsächlich benötigt werden, wodurch Übertragungs- und Speicherkapazitäten effizienter genutzt werden können. Die Daten werden innerhalb der Steuervorrichtung 6 des Filmabtasters einem Rechenwerk zugeführt, das die folgende Verarbeitung der Bildpunktdaten durchführt. In der weiteren Verarbeitung kann für das Ausgabebild ein bestimmtes Seitenverhältnis und eine bestimmte Größe ausgewählt werden. Die entsprechenden Steuerparameter werden ähnlich wie in der oben beschriebenen Weise ebenfalls über die Eingabeeinheit 7 zugeführt. Des weiteren werden noch Steuerparameter in Form von Zahlenwerten eingegeben, mit denen eine bestimmte Auflösung des Ausgabebildes ausgewählt wird. Das bedeutet, es wird zum einen ein Wert für die gewünschte Anzahl von Bildpunkten pro Zeile im Ausgabebild und zum anderen ein Wert für die gewünschte Anzahl von Zeilen pro Ausgabebild eingegeben. Damit stehen dem Benutzer Steuerungsparameter zur Verfügung, mit denen der Filmabtaster aus einem Film eine Folge von Bildern in einem individuellen Format in Echtzeit erzeugt.

Innerhalb der Steuervorrichtung 6 arbeitet das Rechenwerk den aus dem ersten Bildspeicher 5 ausgelesenen Bildausschnitt nach Maßgabe der eingegebenen Steuerungsparameter um. Um ein Ausgabebild mit den gewünschten Abmessungen und Auflösungen zu erzeugen, arbeitet das Rechenwerk als zweidimensionaler Interpolator, der die benötigten neuen Bildpunkte durch Interpolation aus den vorhandenen Daten berechnet. Die Bildpunktdaten des Ausschnitts werden dazu zunächst einem Multi-Phase-FIR-Filter zugeführt. Über den Steuerungsparameter der Phase kann mit diesem Filter aus einer Bildpunktfolge mit dem Eingangsraster 1, 2, 3, ... ein bestimmtes Ausgangsraster erzeugt werden (z. B. wird bei einer Phase 0.4 zwischen den Bildpunktwerten 3 und 5 wird ein Ausgangsraster von... 3.4, 3.8, 4.2, 4.6, 5, ... erzeugt). Ein Adressgenerator holt die Daten der entsprechenden Bildpunkte mit Hilfe des Eingangsrasters aus dem ersten Bildspeicher 5 und interpoliert zwischen den Werten der 8 benachbarten Bildpunkte (z. B. die Werte für das RGB-Signal). Diese Interpolation erfolgt in einer Dimension, wobei die entsprechenden neuen Bildpunkte hinzugefügt werden, wenn beispielsweise bei einer Vergrößerung des Bildausschnitts zusätzliche Bildpunkte für das Ausgabebild benötigt werden. Bei einer Stauchung in einer Dimension werden für das Ausgabebild entsprechend viele Bildpunkte weggelassen und bei Bedarf neue Bildpunkte zur Anpassung des Bildinhalts des Ausschnittes an das gewählte Format des Ausgabebildes hinzugefügt.

Von dem zweidimensionalen Feld von Bildpunktdaten des gewählten Ausschnittes werden zunächst die horizontalen Linien nacheinander im Filter bearbeitet, der die entsprechenden Zwischenwerte (Intermediatepixel) erzeugt und für diese Linien das gewählte Format des Ausgabebildes erzeugt. Anschließend wird das zweidimensionale Feld von Bildpunktdaten in einem weiteren integrierten Baustein an seiner Diagonalen gespiegelt und das entstandenen Feld wieder dem Multi-Phase-FIR-Filter zugeführt. Die ursprünglich vertikalen Linien werden jetzt als horizontale Linien ebenfalls wie oben beschrieben verarbeitet. Dabei können jetzt jedoch andere Parameter für die Umrechnung verwendet werden, wenn in dieser Dimension ein anderes Format für das Ausgabebild ausgewählt und per Steuerungsparameter eingestellt wurde. Danach folgt eine erneute Spiegelung des zweidimensionalen Feldes an der Diagonalen, wodurch Bildpunktdaten für das Ausgabebild im gewählten Format vorliegen. Durch diese Hardwarerealisierung mit integrierten Bausteinen wird ein langsamer Prozeß, bei dem ein entsprechender Algorithmus durch Software realisiert ist und auf einem Computer abläuft, vermieden. Bei den derzeit zur Verfügung stehenden Mikroprozessoren ist die Hardwarelösung etwa um einen Faktor 1000 schneller und ermöglicht so erst einen Echtzeitbetrieb des Rechenwerkes während des Abtastvorgangs.

Die Bildpunktdaten werden dann dem zweiten Bildspeicher 8 zugeführt, der das Ausgabebild speichert. Über eine entspechende Datenschnittstelle am Filmabtaster kann der zweite Bildspeicher 8 ausgelesen werden. Aufgrund des Bildspeichers 8, der als Zwischenspeicher arbeitet, ist der Übertragangsmodus unabhängig vom Ausgang und Geschwindigkeit der Steuervorrichtung 6. Für eine weitere Verarbeitung der Daten muß jetzt nur noch der Teil übertragen werden, der auch tatsächlich benötigt wird. Auf diese Weise reduziert sich nicht nur die Übertragungsgeschwindigkeit, sondern bei einer Speicherung der Daten auch die benötigte Kapazität. Des weiteren wird durch Bestimmung des Formates, insbesondere der Auflösung, für das Ausgabebild schon während des Abtastvorgangs eine direkte Weiterverarbeitung auf Rechnerplattformen oder in Multimediaanwendungen ermöglicht.

## Patentansprüche

1. Filmabtaster mit
- wenigstens einem ersten Bildspeicher (5) zur jeweiligen Speicherung der digitalisierten Bildpunktdaten eines abgetasteten Filmbildes und
- mit wenigstens einer Steuervorrichtung (6) zum Auslesen der jeweiligen Bildpunktdaten eines Bildausschnittes des gespeicherten Filmbildes aus dem ersten Bildspeicher (5),
dadurch gekennzeichnet,
daß in der Steuervorrichtung (6) ein Rechenwerk zur Erzeugung jeweils eines Ausgabebildes in einer bestimmten Größe, mit einem bestimmten Seitenverhältnis und mit einer bestimmten Anzahl von Bildpunkten pro Ausgabebildzeile und von Zeilen pro Ausgabebild durch Berechnung von neuen Bildpunkten vorgesehen ist.

2. Filmabtaster nach Anspruch 1,
dadurch gekennzeichnet,
daß in dem Rechenwerk wenigstens ein Filterschaltkreis zur Bildung von neuen Bildpunkten für das Ausgabebild in wenigstens einer Dimension mittels Interpolationsverfahren und wenigstens ein Spiegelschaltkreis zur Spiegelung des Bildausschnittes an wenigstens einer seiner Diagonalen vorgesehen ist.

3. Filmabtaster nach Anspruch 1 oder 2,
dadurch gekennzeichnet,
daß ein zweiter Bildspeicher (8) zum Einlesen jeweils eines Ausgabebildes vorgesehen ist.

4. Filmabtaster nach einem der Anprüche 1 bis 3,
dadurch gekennzeichnet,
daß wenigstens eine Eingabeeinheit (7) zur Lieferung von Steuerungsparameter für das Rechenwerk für die Größe und die Lage des Bildausschnittes, für die Größe und das Seitenverhältnis des Ausgabebildes, für die Anzahl von Bildpunkten pro Ausgabebildzeile und für die Anzahl von Zeilen pro Ausgabebild vorgesehen ist.

5. Filmabtaster nach Anpruch 4,
dadurch gekennzeichnet,
daß die Eingabeeinheit (7) eine Tastatur enthält, die zur Eingabe von Zahlenwerten sowie zur Anwähl von Vorzugsformaten für das Seitenverhältnis und die Auflösung des jeweiligen Ausgabebildes vorgesehen ist.

6. Filmabtaster nach Anpruch 5,
dadurch gekennzeichnet,
daß als Vorzugsformate jeweils Seitenverhältnisse und Auflösungen von 4:3 bei 720*540 Bildpunkten, 16:9 bei 720*405 Bildpunkten und 16:9 bei 1920*1080 Bildpunkten vorgesehen sind.
